# EUROPEAN PATENT APPLICATION

(11) **EP 4 769 687 A1**
(43) Date of publication of application: **01.07.2026**
(21) Application number: 25867240.1
(22) Date of filing: 14.10.2025
(51) Int. Cl.: H01M 50/129, H01M 50/121, H01M 50/119, B32B 15/08, B32B 27/08, B32B 27/32, B32B 27/34, B32B 27/36

(54) **POUCH FILM LAMINATE, POUCH-TYPE BATTERY CASE, AND POUCH-TYPE SECONDARY BATTERY**

(30) Priority: 18.10.2024 KR 20240142705
(71) Applicant: LG Energy Solution, Ltd., Seoul 07335 (KR)
(72) Inventor: KIM, Gi Woung, Daejeon 34122 (KR); HWANG, Soo Ji, Daejeon 34122 (KR); SONG, Dae Woong, Daejeon 34122 (KR); SHIN, Ji Hyun, Daejeon 34122 (KR); LEE, Wan Soo, Daejeon 34122 (KR)
(74) Representative: Plasseraud IP
(86) International application number: PCT/KR2025/016185
(87) International publication number: WO 2026/084433

(57) **Abstract**

The present disclosure relates to a pouch film laminate comprising a base layer, a gas barrier layer, and a sealant layer, which are sequentially laminated, wherein the sealant layer comprises a first sealant layer disposed adjacent to the gas barrier layer and a second sealant layer laminated on the first sealant layer, the second sealant layer includes polypropylene (PP) modified with siloxane, and the polypropylene (PP) modified with siloxane has a weight average molecular weight of 100,000 to 500,000.

## Description

### [TECHNICAL FIELD]

### Cross-reference to Related Applications

This application claims priority from Korean Patent Application No. 10-2024-0142705, filed on October 18, 2024, the disclosure of which is incorporated by reference herein.

### TECHNICAL FIELD

The present disclosure relates to a pouch film laminate, a pouch-type battery case, and a pouch-type secondary battery.

### [BACKGROUND ART]

Secondary batteries are used not only in small electronic products such as digital cameras, P-DVDs, MP3 players, mobile phones, PDAs, portable game devices, power tools, and E-bikes, but also in large products requiring high output such as electric vehicles and hybrid vehicles, power storage devices for storing surplus generated power or new renewable energy, and backup power storage devices.

In general, secondary batteries are prepared by a method in which the positive electrode current collector and negative electrode current collector are coated with an electrode active material slurry to prepare the positive and negative electrodes, after an electrode assembly having a predetermined shape is formed by laminating them on both sides of a separator, the electrode assembly is accommodated in a battery case, and an electrolyte is injected and then sealed.

Secondary batteries are classified into a pouch-type secondary battery and a can-type secondary battery according to the case materials accommodating the electrode assembly. In the pouch type, the electrode assembly is accommodated in a pouch prepared from a flexible polymer material. In addition, in the can type, the electrode assembly is accommodated in a case made of a material such as metal or plastic.

The pouch-type battery case is prepared by performing press processing on a pouch film laminate having flexibility to form a cup part. Also, when the cup part is formed, the electrode assembly is accommodated in the accommodation space of the cup part, and the sealing part is sealed to prepare the secondary battery.

During the pressing, drawing molding is performed by inserting a pouch film into press equipment and applying pressure to the pouch film laminate with a punch to stretch the pouch film laminate. A pouch film laminate is generally formed of a plurality of layers in which a polymer film such as polyethylene terephthalate is laminated on one surface of a gas barrier layer made of a metal material, and a sealant layer is laminated on the other surface.

In recent years, as the demand for high-capacity batteries such as batteries for electric vehicles and ESS batteries has increased, the demand for battery cases capable of accommodating more electrode assemblies has also grown. Accordingly, a two-cup molding method has been attempted to increase the molding depth or volume of the cup part of the pouch-type battery case by molding the cup part in each of the upper and lower cases.

When the pouch film laminate is prepared according to the related art, a lubricant is included in a sealant layer of the innermost layer of the pouch film or applied to the sealant layer surface to prevent the pouch films from adhering to each other and facilitate a subsequent process. However, this method has a problem in that a lubricant component remains on the sealant layer surface, thereby contaminating the molding mold during pouch molding in the secondary battery manufacturing process.

Therefore, there has been a need to develop a pouch film laminate that improve secondary battery productivity by preventing contamination of the molding die to increase processability and reducing the cleaning frequency.

### [DISCLOSURE OF THE INVENTION]

### [TECHNICAL PROBLEM]

To address such problems, the object of the present disclosure is to provide a pouch film laminate, a pouch-type battery case, and a pouch-type secondary battery, with a reduced coefficient of friction and improved processability by preventing contamination of the molding mold, along with reduced wrinkles and moldability deterioration during cup part molding.

### [TECHNICAL SOLUTION]

The present disclosure provides a pouch film laminate comprising a base layer, a gas barrier layer, and a sealant layer, which are sequentially laminated, wherein the sealant layer comprises a first sealant layer disposed adjacent to the gas barrier layer and a second sealant layer laminated on the first sealant layer, the second sealant layer includes polypropylene (PP) modified with siloxane, and the polypropylene (PP) modified with siloxane has a weight average molecular weight of 100,000 to 500,000.

The present disclosure provides the pouch film laminate according to [1] above, wherein the second sealant layer comprises the polypropylene (PP) modified with siloxane in an amount of 10 wt% to 70 wt% based on the total weight of the second sealant layer.

The present disclosure provides the pouch film laminate according to [1] or [2] above, wherein the second sealant layer has a thickness of 10 µm or more.

The present disclosure provides the pouch film laminate according to at least one of [1] to [3] above, wherein an amount of the lubricant present on the surface of the sealant layer is less than 1mg/m².

The present disclosure provides the pouch film laminate according to at least one of [1] to [4] above, wherein the sealant layer has a coefficient of friction of 0.05 to 0.30.

The present disclosure provides the pouch film laminate according to at least one of [1] to [5] above, wherein the base layer comprises any one or more of polyethylene terephthalate (PET) and nylon.

The present disclosure provides the pouch film laminate according to at least one of [1] to [6] above, wherein the base layer has a thickness of 5µm to 70µm.

The present disclosure provides the pouch film laminate according to at least one of [1] to [7], wherein the gas barrier layer comprises one or more metals selected from aluminum (Al), copper (Cu), stainless steel (SUS), nickel (Ni), titanium (Ti), and INVAR.

The present disclosure provides the pouch film laminate according to at least one of [1] to [8] above, wherein the gas barrier layer has a thickness of 20µm to 100µm.

The present disclosure provides the pouch film laminate according to at least one of [1] to [9] above, wherein the sealant layer includes one or more selected from polypropylene (PP), acid-modified polypropylene (PPa), and cast polypropylene (CPP).

The present disclosure provides the pouch film laminate according to at least one of [1] to [10] above, wherein the sealant layer has a thickness of 30µm to 130µm.

The present disclosure provides the pouch film laminate according to at least one of [1] to [11] above, wherein the pouch film laminate has a thickness of 120µm to 300µm.

The present disclosure provides a pouch-type battery case prepared by drawing and molding the pouch film laminate according to at least one of [1] to [12] above.

The present disclosure provides a pouch-type secondary battery comprising the pouch-type battery case of [13] above.

### [ADVANTAGEOUS EFFECTS]

Since the pouch film laminate according to the present disclosure comprises the second sealant layer including polypropylene (PP) modified with siloxane having a weight average molecular weight of 100,000 to 500,000, the coefficient of friction may be reduced, and the cleaning cycle of the lubricant for the molding die may be reduced without including a separate lubricant to improve processability and prevent wrinkles during cup part molding, thereby enhancing the moldability of the pouch film laminate.

### [BRIEF DESCRIPTION OF THE DRAWINGS]

The drawings attached to the present specification illustrate preferred embodiments of the present disclosure and serve to better understand the technical concept of the present disclosure together with the above-described contents of the present disclosure. It should not be construed as being limited only to the matters described in the drawings. Meanwhile, the shapes, sizes, scales, or proportions of elements in the drawings included in the present specification may be exaggerated to emphasize a clearer description.
FIG. 1 is a cross-sectional view of the pouch film laminate according to the present disclosure.
FIG. 2 is an exploded view of the secondary battery according to the present disclosure.

### [MODE FOR CARRYING OUT THE INVENTION]

It will be understood that terms or words used in the present disclosure and claims shall not be construed as being limited to having meanings defined in commonly used dictionaries, but should be interpreted as having meanings and concepts consistent with the technical idea of the present disclosure based on the principle that an inventor may appropriately define concepts of the terms to best explain the invention.

The terminology used herein is for the purpose of describing embodiments and is not intended to limit the invention. In the present specification, the singular forms also include the plural forms unless otherwise specified. The terms such as "comprises" and/or "comprising" used herein do not exclude the presence or addition of one or more other components in addition to the mentioned components.

Hereinafter, the present disclosure will be described in more detail.

The pouch film laminate, pouch-type battery case, and/or pouch-type secondary battery according to the present disclosure may include at least one of the constitutions disclosed below, and may include any combination between technically possible constitutions among the following constitutions.

### <Pouch Film Laminate>

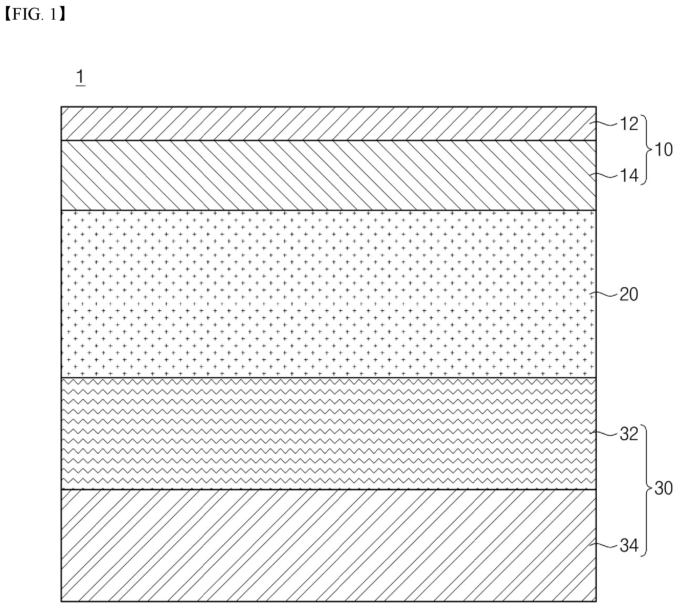

First, the pouch film laminate (1) according to the present disclosure will be described. FIG. 1 illustrates the pouch film laminate (1) according to the present disclosure .

Referring to FIG. 1, the pouch film laminate (1) according to the present disclosure may comprise a base layer (10), a gas barrier layer (20), and a sealant layer (30), which are sequentially laminated, wherein the sealant layer (30) may include a first sealant layer (32) and a second sealant layer (34). In the pouch film laminate (1), the base layer (10), gas barrier layer (20), first sealant layer (32), and second sealant layer (34) may be sequentially laminated.

When the pouch film laminate is prepared according to the related art, in order to prevent the pouch film laminates from adhering to each other and to easily perform the subsequent process, the lubricant remains present provided on the surface of the sealant layer by a method such as including the lubricant in the sealant layer of the innermost layer of the pouch film or applying the lubricant to the surface of the sealant layer. However, the molding die becomes contaminated by the lubricant present on the surface of the sealant layer, requiring frequent cleaning of the molding die. This results in deteriorated processability.

However, when the second sealant layer is made of polypropylene (PP) modified with siloxane having a weight average molecular weight of 100,000 to 500,000 as in the present disclosure, the physical characteristics may be maintained even at high temperatures due to the strong heat resistance of siloxane, and the robust bonding of the siloxane structure can increase abrasion resistance to enhance the durability of the modified polypropylene (PP), thereby ensuring stable performance in various environments. This enables the manufacture of a pouch film laminate having excellent processability and moldability compared to cases where a lubricant is included or applied.

Hereinafter, each configuration of the pouch film laminate according to the present disclosure will be described in more detail with reference to FIG. 1.

### (1) Base layer

The base layer (10) may be disposed on the outermost layer of the battery case to protect the electrode assembly from external impact and electrically it, and the base layer (10) may include any one or more of polyethylene terephthalate (PET) and nylon.

According to an embodiment, the base layer (10) may have a structure in which a polyethylene terephthalate (PET) film (12) and a nylon film (14) are laminated. Here, it is preferable that the nylon film (14) is disposed on the side of the gas barrier layer (20), i.e., on the inner side, and the polyethylene terephthalate film (12) is disposed on the surface side of the battery case.

Polyethylene terephthalate (PET) exhibits excellent durability and electrical insulation. As a result, when the PET film is disposed on the surface side, excellent durability and insulation are exhibited. However, since the PET film has weak adhesiveness to the aluminum alloy thin film constituting the gas barrier layer (20) and has different a stretching behavior, when the PET film is disposed on the side of the gas barrier layer, the base layer and the gas barrier layer may be peeled off from each other in the molding process, and the gas barrier layer may not be uniformly stretched, thereby resulting in that deteriorated moldability. In contrast, since the nylon film has a stretching behavior similar to the aluminum alloy thin film constituting the gas barrier layer (20), when the nylon film is disposed between the polyethylene terephthalate and the gas barrier layer, enhanced moldability may be achieved.

The base layer (10) may have a thickness of 5µm to 70µm, specifically 7µm to 65µm, and more specifically 10µm to 60µm. When the above range is satisfied, excellent moldability and post-moldability rigidity may be exhibited.

In addition, when the base layer (10) has a structure where polyethylene terephtalate (PET) film(12) and a nylon film (14), the polyethylene terephthalate film may have a thickness of 5µm to 30µm, specifically 7µm to 30µm, more specifically 10µm to 15µmm, and the nylon film may have a thickness of 10um to 60µm, specifically 10µm to 55µm, and more specifically 15µm to 40µm. When the thicknesses of the polyethylene terephthalate film and the nylon film satisfy the above ranges, excellent moldability and post-molding rigidity can be exhibited.

### (2) Gas barrier layer

The gas barrier layer (20) is laminated between the base layer (10) and the sealant layer (30) to secure pouch mechanical strength, block the passage of gas or moisture from outside the secondary battery, and prevent the electrolyte from leaking from inside the pouch-type battery case.

The gas barrier layer (20) may be formed of metals. For example, the gas barrier layer may be a metal thin film including one or more metals selected from aluminum (Al), copper (Cu), stainless steel (SUS), nickel (Ni), titanium (Ti), and INVAR, but is not limited thereto.

According to an embodiment of the present disclosure, the gas barrier layer (20) may be formed of an aluminum alloy thin film. When the gas barrier layer (20) is formed by using the aluminum alloy thin film, it may secure mechanical strength of a predetermined level or more while being lightweight, and may compensate for the electrochemical properties affected by the electrode assembly and the electrolyte, while also providing improved heat dissipation. The aluminum alloy thin film may include an element other than aluminum (Al). For example, the aluminum alloy thin film may include one or more selected from iron (Fe), copper (Cu), chromium (Cr), manganese (Mn), nickel (Ni), magnesium (Mg), silicon (Si), and zinc (Zn).

In another embodiment, the gas barrier layer (20) may be formed of a stainless steel thin film. Specifically, the gas barrier layer (20) may be prepared by molding and/or processing a stainless steel thin film. The gas barrier layer (20) formed of stainless steel may have relatively low thermal conductivity to be effective in preventing or delaying heat spread to another cell during thermal runaway, and may have relatively high toughness to suppress the occurrence of cracks in the pouch during use of the pouch-type battery. For example, the aluminum alloy thin film may include one or more selected from iron (Fe), copper (Cu), chromium (Cr), manganese (Mn), nickel (Ni), magnesium (Mg), silicon (Si), and zinc (Zn).

Th gas barrier layer (20) may have a thickness of 20µm to 100µm, specifically 30µm to 90 µm, and more specifically 40µm to 85µm. When the above range is satisfied, it is preferable in terms of appropriately blocking the passage of gas or moisture from outside the secondary battery, and preventing the electrolyte from leaking from inside the pouch-type battery case. In addition, moldability and gas barrier performance may be improved during cup part molding.

### (3) Sealant layer

When the pouch-type battery case (210) accommodating the electrode assembly therein is sealed, the sealant layer (30) is to completely seal the inside of the pouch-type battery case from the outside by being thermally bonded to each other at the sealing part (250). To this end, the sealant layer (30) may be formed of a material having excellent thermal adhesion strength.

The sealant layer (30) may have a composite film structure in which two or more materials are formed as layers. Specifically, the sealant layer (30) according to the present disclosure includes a first sealant layer (32) and a second sealant layer (34). In this case, the first sealant layer (32) is a layer disposed to be adjacent to the gas barrier layer (20), and the second sealant layer (34) is a layer disposed on the first sealant layer (32). The first sealant layer (32) and the second sealant layer (34) may include materials having different materials and/or physical properties, respectively.

Th gas barrier layer (30) may have a thickness of 30µm to 130µm, specifically 40µm to 120µm, and more specifically 60µm to 100µm. When the thickness of the sealant layer satisfies the above range, it has the effect of securing the moldability of the pouch film laminate while securing the sealing strength of the sealing part.

The amount of the lubricant present on the surface of the sealant layer (30) may be less than 1mg/m², specifically less than 0.5mg/m², and more specifically the lubricant may not be included. In the sealant layer according to the present disclosure, even if the lubricant is included within the above range, since polypropylene (PP) modified with siloxane having a weight average molecular weight of 100,000 to 500,000 is separately included in the second sealant layer (34), excellent slip property and moldability may be exhibited, and an appropriate frictional force may be maintained. Furthermore, since the molding die is less contaminated due to the small amount of the lubricant, the lubricant cleaning cycle may be extended, thereby enhancing processability.

The sealant layer (30) may have a coefficient of friction of 0.05 or more, specifically 0.1 or more, more specifically 0.15 or more, and of 0.30 or less, specifically 0.25 or less, more specifically 0.22 or less. When the above range is satisfied, the slip property of the sealant layer is appropriately improved, and even if physical deformation occurs in the sealant layer during molding, it exhibits fewer defects including cracks and reduced whitening.

Hereinafter, each of the first sealant layer (32) and the second sealant layer (34) described above will be described in more detail.

### 1) First sealant layer

The first sealant layer (32) is characterized by being disposed to be adjacent to the gas barrier layer (20) as described above.

The first sealant layer (32) may be formed of a polymer material. Specifically, the first sealant layer (32) may include one or more materials selected from polyethylene, polypropylene, polycarbonate, polyethylene terephthalate, polyvinyl chloride, an acrylic polymer, polyacrylonitrile, polyimide, polyamide, cellulose, aramid, nylon, polyester, polyparaphenylene benzobisoxazole, polyarylate, teflon, and glass fiber, and preferably may include a polyolefin resin such as polypropylene (PP) and/or polyethylene (PE). In this case, the polypropylene may be composed of cast polypropylene (CPP), or acid modified polypropylene (PPa) or a polypropylene-butylene-ethylene terpolymer. More preferably, the first sealant layer may include one or more selected from polypropylene (PP), acid modified polypropylene (PPa), and cast polypropylene (CPP).

It is particularly preferably that the first sealant layer (32) includes acid-modified polypropylene (PPa) in order to secure long-term adhesion performance between the gas barrier layer (20) and the first sealant layer (32).

The first sealant layer (32) may have a thickness of 10µm to 100µm, specifically 20µm to 80µm, and more specifically 30µm to 50µm. When the above range is satisfied, the sealing durability and insulation of the sealing part may be improved, and the yield strength may be excellent so that the sealing strength of the sealing part may increase. In addition, the entire thickness of the pouch film laminate may not be excessively thick so that moldability can increase, and the accommodation space for the electrode assembly in the pouch-type battery case prepared by molding the pouch film laminate may increase, thereby resulting in higher energy density relative to the volume of the secondary battery.

### 2) Second sealant layer

The second sealant layer (34) is characterized by being laminated on the first sealant layer (32) as described above.

The second sealant layer (34) may be formed of a material having insulation properties, corrosion resistance, and sealing properties. Since the second sealant layer (34) is in direct contact with the electrode assembly and/or the electrolyte inside the accommodation space, it may be formed of a material having insulation and corrosion resistance. In addition, since the second sealant layer (34) needs to completely seal the inside of the pouch-type battery case to block any transfer of materials from moving between the inside and the outside, it may be formed of a material having high sealing property (e.g., excellent thermal adhesion strength).

The second sealant layer (34) may include one or more materials selected from polypropylene (PP) modified with siloxane, polypropylene (PP), polyethylene, polycarbonate, polyethylene terephthalate, polyvinyl chloride, an acrylic polymer, polyacrylonitrile, polyimide, polyamide, cellulose, aramid, nylon, polyester, polyparaphenylene benzobisoxazole, polyarylate, teflon, and glass fiber, and may specifically include polypropylene (PP) modified with siloxan and polypropylene (PP). The polypropylene (PP) modified with siloxane has a structure in which siloxane is attached to an end of a branch of the polypropylene (PP), and the siloxane branches may be disposed on the surface of the second sealant layer to have a reduced coefficient of friction due to electrical and chemical characteristics. Thus, the polypropylene (PP) modified with siloxane may improve flexibility and processability of the second sealant layer, thereby reducing wrinkles, cracks, and the like that may occur when the pouch film laminate is molded. As a result, even if a separate lubricant is not applied to the sealant layer, the frictional force may be maintained; unlike the case in which the lubricant is applied, the contamination of the molding die may be reduced, which may extend the cleaning cycle and improve processability; the defect rates caused by contamination may also be reduced to improve processability; wrinkles may not occur during cup part molding; and the maximum molding depth may be excellent.

Here, the polypropylene (PP) modified with siloxane may have a weight average molecular weight of 100,000 or more, specifically 150,000 or more, more specifically 200,000 or more, and of 500,000 or less, specifically 450,000 or less, more specifically 400,000 or less. When the weight average molecular weight of the polypropylene (PP) modified with siloxane is less than 100,000, mechanical strength decreases due to the low weight average molecular weight which weakens durability, which in turn lowers thermal stability to cause wrinkles during molding. When the weight average molecular weight of the polypropylene (PP) modified with siloxane is more than 500,000, it has high viscosity and is difficult to process, which leads to poor mixing with polypropylene (PP) in the second sealant layer.

The weight average molecular weight may refer to a converted value based on standard polystyrene measured by Gel Permeation Chromatograph (GPC), and unless otherwise specified, the molecular weight may refer to a weight average molecular weight. For example, in the present disclosure, the weight average molecular weight is measured using Agilent 1200 series, wherein the column used may be a PL mixed B column manufactured by Agilent, and the solvent may be tetrahydrofuran (THF).

The second sealant layer may include polypropylene (PP) modified with siloxane in an amount of 10 wt% to 70 wt%, specifically 30 wt% to 65 wt%, and more specifically 45 wt% to 55 wt% based on the total weight of the second sealant layer. When the weight ratio of the polypropylene (PP) modified with siloxane satisfies the above range, an appropriate frictional force may be generated due to its slip property, thereby preventing a blocking phenomenon, in which the layers adhere to each other during the manufacture of the pouch film laminate.

The thickness of the second sealant layer (34) may be 10µm or more, preferably 15µm or more, 20µm or more, 25µm or more, or 30µm or more, and may be 80µm or less, 75µm or less, 70 µm or less, 65µm or less, or 60µm or less, more preferably 30µm to 60µm. When the thickness of the second sealant layer satisfies the above range, it has the effect of securing the moldability of the pouch film laminate while securing the sealing strength of the sealing part.

The pouch film laminate according to the present disclosure as described above may be prepared through a method for manufacturing a pouch film laminate known in the art. For example, the pouch film laminate according to the present disclosure may be prepared through a method of attaching the base layer (10) to the top surface of the gas barrier layer (20) through an adhesive, forming the sealant layer (30) on the bottom surface of the gas barrier layer (20) by co-extrusion or an adhesive layer, and applying the silicone-based release coating layer(40) on the bottom surface of the sealant layer (30) through heat treatment, or may be prepared through a method such as dry lamination or sandwich lamination. However, the method for manufacturing the pouch film laminate is not limited thereto.

Th pouch film laminate may have a thickness of 120µm to 300µm specifically 130µm to 280µm, and more specifically 140µm to 200µm. When the thickness of the pouch film laminate satisfies the above range, the molding depth may increase while minimizing the reduction of the battery accommodation space and the deterioration of sealing durability due to the increased thickness of the pouch laminate.

### <Pouch-type Secondary Battery>

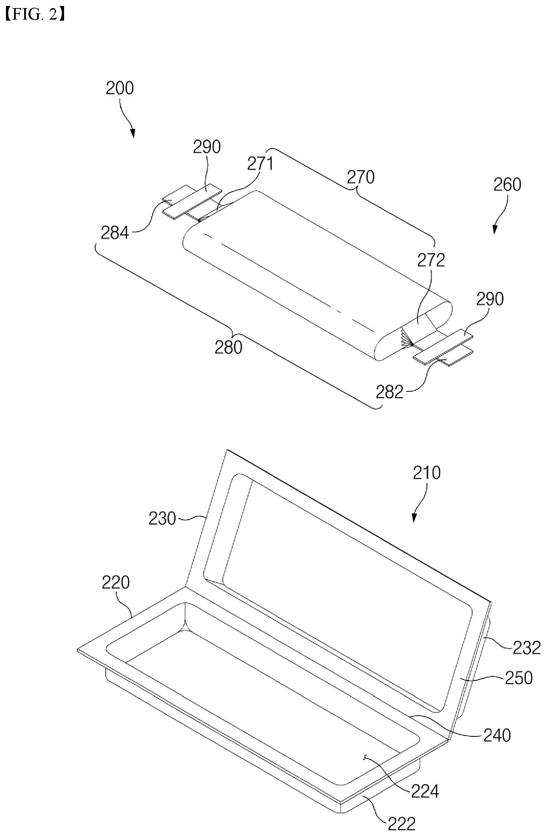

Next, the pouch-type secondary battery (200) according to the present disclosure will be described. FIG. 2 is an exploded and assembled view of the pouch-type secondary battery (200) according to the present disclosure.

As illustrated in FIG. 2, the pouch-type secondary battery (200) according to the present disclosure may include a pouch type battery case (210), prepared by molding the pouch film laminate, and the electrode assembly (260) accommodated in the pouch-type battery case (210). Specifically, the pouch-type secondary battery (200) according to the present disclosure may comprise the pouch-type battery case (210), the electrode assembly (260), the electrode lead (280), the insulator (290), and the electrolyte (not illustrated).

Hereinafter, each configuration of the pouch-type secondary battery according to the present disclosure will be described in more detail with reference to FIG. 2.

### (1) Pouch-type Battery Case

The pouch-type battery case (210) may be prepared by molding the above-described pouch film laminate according to the present disclosure. The pouch-type battery case (210) may accommodate the electrode assembly (260) inside. Since the detailed configuration and physical properties of the pouch film laminate are the same as those described above, the detailed description thereof will be omitted.

The pouch film laminate may be subjected to drawing and stretching by a punch or the like to manufacture the pouch-type battery case (210). As a result, the pouch-type battery case (210) may include the cup part (222) and the accommodation part (224). The accommodation part (224) is a place where the electrode assembly is accommodated, and may mean an accommodation space formed in a bag shape inside the cup part (222) as the cup part (222) is formed.

According to an embodiment of the present disclosure, the pouch-type battery case (210) may include a first case (220) and a second case (230) as illustrated in FIG. 3. The first case (220) may include the accommodation part (224) that may accommodate the electrode assembly (260), and the second case (230) may cover the accommodation part (224) from above so that the electrode assembly (260) is not separated from the outside of the battery case (210). As illustrated in FIG. 3, the first case (220) and the second case (230) may be prepared so that one side thereof is connected to each other, but is not limited thereto, and may be prepared in various manners including being separated and prepared individually.

According to another embodiment of the present disclosure, when the cup part is molded in the pouch film laminate, the two cup parts (222, 232) that are symmetrical to each other may be drawn and molded to be adjacent to one another in one pouch film laminate. In this case, as illustrated in FIG. 3, the cup parts (222, 232) may be formed in the first case (220) and the second case (230), respectively. After the electrode assembly (260) is accommodated in the accommodation part (224) provided in the cup part (222) of the first case (220), the bridge part (240) formed between the two cup parts (222, 232) may be folded so that the two cup parts (222, 232) face each other. In this case, the cup part (232) of the second case (230) may accommodate the electrode assembly (260) from above. Thus, since the two cup parts (222, 232) accommodate one electrode assembly (260), the electrode assembly (260) having a greater thickness compared to the case, where only one cup part (222) is provided, may be accommodated. In addition, since one edge of the secondary battery (200) is formed by folding the pouch-type battery case (210), the number of edges to be sealed when the sealing process is performed later may be reduced. Accordingly, the process speed of the pouch type secondary battery (200) may be improved, and the number of sealing processes may be reduced.

The pouch-type battery case (210) may be sealed in a state in which the electrode assembly (260) is accommodated to expose a portion of the electrode lead (280), i.e., a terminal part, which will be described later. Specifically, when the electrode lead (280) is connected to the electrode tab (270) of the electrode assembly (260), and the insulating part (290) is formed on a portion of the electrode lead (280), the electrode assembly (260) may be accommodated in the accommodation part (224) provided in the cup part (222) of the first case (220), and the second case (230) may cover the accommodation part (224) from above. Next, the electrolyte may be injected into the accommodation part (224), and the sealing part (250) formed on each of the edges of the first case (220) and the second case (230) may be sealed.

The sealing part (250) may perform a role of sealing the accommodation part (224). Specifically, the sealing part (250) may be formed along an edge of the accommodation part (224) to seal the accommodation part (224). The temperature at which the sealing part (250) is sealed may be 180°C to 250°C, specifically 200°C to 250°C, and more specifically 210°C to 240°C. When the sealing temperature satisfies the numerical range, the pouch-type battery case (210) may secure sufficient sealing strength by thermal bonding.

### (2) Electrode Assembly

The electrode assembly (260) may be inserted into the pouch-type battery case (210) and sealed by the pouch-type battery case (210) after the electrolyte is injected.

The electrode assembly (260) may be formed by sequentially laminating a positive electrode, a separator, and a negative electrode. Specifically, the electrode assembly (260) may include two types of electrodes, i.e., a positive electrode and a negative electrode, and a separator interposed between the electrodes to insulate the electrodes from each other.

Each of the positive electrode and the negative electrode may have a structure in which the active material slurry is applied to an electrode current collector in the form of a metal foil or a metal mesh including aluminum and copper. The slurry may be generally formed by stirring a particulate active material, an auxiliary conductor, a binder, a conductive material, and the like with the solvent added. The solvent may be removed in the subsequent process.

A slurry in which an electrode active material and a binder and/or a conductive material are mixed is applied to positive and negative current collectors to manufacture a positive electrode and a negative electrode and laminate them on both sides of the separator, thereby manufacturing the electrode assembly (260) in a predetermined shape. The type of the electrode assembly (260) may include, but is not limited to, a stack type, a jelly roll type, and a stack and folding type.

The electrode assembly (260) may include an electrode tab (270).

The electrode tab (270) may be connected to the positive electrode and the negative electrode of the electrode assembly (260), respectively, and may protrude outward from the electrode assembly (260) to serve as a path through which electrons move between the inside and the outside of the electrode assembly (260). The electrode current collector included in the electrode assembly (260) may include a portion coated with the electrode active material and an end portion which is not coated with the electrode active material, i.e., a non-coating portion. The electrode tab (270) may be formed by cutting the non-coating portion or connecting a separate conductive member to the non-coating portion by ultrasonic welding or the like. As illustrated in FIG. 2, the electrode tab (270) may protrude in different directions of the electrode assembly (260), but is not limited thereto, and may protrude in various directions, including protruding from one side in the same direction.

### (3) Electrode Lead

The electrode lead (280) may supply electricity to the outside of the secondary battery (200). The electrode lead (280) may be connected to the electrode tab (270) of the electrode assembly (260) by spot welding or the like.

The electrode lead (280) may be connected to the electrode assembly (260), and protrude to the outside of the pouch-type battery case (210) through the sealing part (250). Specifically, one end of the electrode lead (280) may be connected to the electrode assembly (260), particularly, the electrode tab (270), and the other end of the electrode lead (280) may protrude to the outside of the pouch-type battery case (210).

The electrode lead (280) may include a positive electrode lead (282) having one end connected to the positive electrode tab (272) and extending in a direction in which the positive electrode tab (272) protrudes, and a negative electrode lead (284) having one end connected to the negative electrode tab (274) and extending in a direction in which the negative electrode tab (274) protrudes. The other end of each of the positive electrode lead (282) and the negative electrode lead (284) may protrude to the outside of the battery case (210). Thus, the electricity generated inside the electrode assembly (260) may be supplied to the outside. Also, since the positive electrode tab (272) and the negative electrode tab (274) protrude in various directions, the positive electrode lead (282) and the negative electrode lead (284) may also extend in various directions. The positive electrode lead (282) and the negative electrode lead (284) may be made of different materials. That is, the positive electrode lead (282) may be made of the same aluminum (Al) material as the positive electrode current collector, and the negative electrode lead (284) may be made of the same copper (Cu) material or nickel (Ni)-coated copper material as the negative electrode current collector. A portion of the electrode lead (280) protruding to the outside of the battery case (210) may serve as a terminal part and may be electrically connected to the external terminal.

### (4) Insulating part

The insulating part (290) may prevent electricity generated from the electrode assembly (260) from flowing to the battery case (210) through the electrode lead (280) and may maintain the sealing of the battery case (210). To this end, the insulating part (290) may be formed of a non-conductor having non-conductivity through which electricity does not easily pass. In general, an insulating tape or a film that is easily attached to the electrode lead (280) and is relatively thin is often used as the insulating part (290), but is not limited thereto, and any member capable of insulating the electrode lead (280) may be used.

The insulating part (290) may be disposed to surround the outer circumferential surface of the electrode lead (280). Specifically, at least a portion of the electrode lead (280) may be surrounded by the insulating part (290). In this case, the insulating part (290) may be disposed between the electrode lead (280) and the pouch-type battery case (210). The insulating part (290) may be disposed to be limited to the sealing part (250), where the first case (220) and the second case (230) of the pouch-type battery case (210) are thermally fused to each other, and may allow the electrode lead (280) to adhere to the battery case (210).

### (5) Electrolyte

The pouch type secondary battery (200) according to the present disclosure may further comprise an electrolyte injected into the pouch type battery case (210). The electrolyte is configured to transfer lithium ions generated by electrochemical reactions of the electrode during charging/discharging of the secondary battery (200), and may include a non-aqueous organic electrolyte solution that is a mixture of a lithium salt and an organic solvent or a polymer using a polymer electrolyte. Furthermore, the electrolyte may include a sulfide-based, oxide-based, or polymer-based solid electrolyte, and the solid electrolyte may have flexibility that is easily deformed by an external force.

Hereinafter, the present disclosure will be described in detail, according to examples. However, the invention may be embodied in many different forms and should not be construed as being limited to the embodiments set forth herein. It will be apparent to those skilled in the art that various modifications and alterations may be possible without departing from the scope and spirit of the present disclosure, and such modifications and alterations are duly included in the present disclosure as defined by the appended claims.

### Examples and Comparative Examples

### Example 1 Preparation of pouch film laminate

A first sealant layer having a total thickness of 40 µm containing acid-modified polypropylene (PPa) and polypropylene (PP) sequentially laminated was prepared, and a second sealant layer having a total thickness of 40µm including polypropylene (PP) modified with siloxane having a weight average molecular weight of 300,000 was laminated on the first sealant layer. Here, the second sealant layer was prepared to include polypropylene (PP) modified with siloxane: polypropylene (PP) at a weight ratio of 50:50.

Thereafter, a second adhesive film, a nylon film having a thickness of 25µm, a first adhesive film, and a polyethylene terephthalate film having a thickness of 12µm were sequentially laminated on one surface of the aluminum alloy thin film having a thickness of 60µm, and a sealant layer including the first sealant layer and the second sealant layer was sequentially laminated on the other surface of the aluminum alloy thin film.

As a result, a pouch film laminate having a structure in which the second sealant layer, the first sealant layer, the aluminum alloy thin film, the second adhesive film, the nylon film, the first adhesive film, and the polyethylene terephthalate film, prepared above, are sequentially laminated, was prepared.

### Example 2 Preparation of pouch film laminate

A pouch film laminate was prepared in the same manner as in Example 1, except that polypropylene (PP) modified with siloxane having a weight average molecular weight of 100,000 was used.

### Example 3 Preparation of pouch film laminate

A pouch film laminate was prepared in the same manner as in Example 1, except that the weight ratio of polypropylene (PP) modified with siloxane : polypropylene (PP) was 70:30.

### Example 4 Preparation of pouch film laminate

A pouch film laminate was prepared in the same manner as in Example 1, except that the second sealant layer was laminated to have a thickness of 10µm.

### Example 5 Preparation of pouch film laminate

A pouch film laminate was prepared in the same manner as in Example 1, except that the second sealant layer was laminated to have a thickness of 8µm.

### Example 6 Preparation of pouch film laminate

A pouch film laminate was prepared in the same manner as in Example 1, except that the second sealant layer was laminated to have a thickness of 60µm.

### Comparative Example 1: Preparation of pouch film laminate

A pouch film laminate was prepared in the same manner as in Example 1, except that polydimethylsiloxane (PDMS) was used instead of polypropylene (PP) modified with siloxane.

### Comparative Example 2: Preparation of pouch film laminate

A pouch film laminate was prepared in the same manner as in Example 1, except that polypropylene (PP) modified with siloxane having a weight average molecular weight of 80,000 was used.

### Comparative Example 3: Preparation of pouch film laminate

A pouch film laminate was prepared in the same manner as in Example 1, except that polypropylene (PP) modified with siloxane having a weight average molecular weight of 600,000 was used.

### Comparative Example 4: Preparation of pouch film laminate

A pouch film laminate was prepared in the same manner as in Example 1, except that a lubricant (Erucamide) was applied to the surface of the sealant layer in an amount of 4 mg/m², without separately forming a second sealant layer.

### Comparative Example 5: Preparation of pouch film laminate

A pouch film laminate was prepared in the same manner as in Example 1, except that a lubricant (Erucamide) was applied to the surface of the sealant layer in an amount of 26 mg/m², without separately forming a second sealant layer.

### Experimental Example 1 Measurement of Coefficient of Friction

The coefficients of friction of each of the pouch film laminates prepared according to Examples 1 to 6 and Comparative Examples 1 to 5 were measured.

As a method for measuring the coefficient of friction, the coefficient of friction was measured by bringing a sled metal having a size of 130 mm (MD direction)x65 mm (TD direction) and a weight of 200 g into contact with a silicone-based release coating layer of the pouch film laminate having a size of 300 mm (MD direction)x200mm (TD direction).

Specifically, the coefficient of friction was measured by moving the sled metal over the sealant layer by 100 mm at a speed of 100 mm/min, and using the coefficient of kinetic friction measured five times in a section of 20 mm to 80 mm as an average value.

The measured results are presented in Table 1 below.

### Experimental Example 2 Evaluation of moldability of pouch film laminate

### (1) Evaluation of molding depth

The moldability of each of the pouch film laminates prepared according to Examples 1 to 6 and Comparative Examples 1 to 5 was measured.

As a method for evaluating the moldability of the pouch film laminate, the pouch film laminate was cut into the same size of 300 mm (MD direction) ? 400 mm (TD direction), and then the maximum molding depth at which no crack was generated was recorded while changing the molding depth in a battery case molding apparatus having two molding parts having sizes of 61 mm (MD direction) ? 159 mm (TD direction). Here, the punch and the molding part of the battery case molding apparatus were filleted at the corner and the edge, where the corner of the punch had a curvature of 2 mm and the edge had a curvature of 0.5 mm, and the corner of the molding part had a curvature of 2.5 mm and the edge had a curvature of 1 mm. Also, a clearance between the punch and the molding part was 0.5 mm.

The measured molding depths are shown in Table 1 below.

### (2) Evaluation of wrinkle occurrence

During the evaluation of the molding depth, when the pouch film is molded by the non-contaminated molding apparatus, if wrinkles occurred in the cup part of the pouch film laminate at the maximum molding depth, the result was evaluated as O, and if wrinkles did not occur, the result was evaluated as X.

The occurrence of wrinkles is shown in Table 1 below.

### Experimental Example 3 Measurement of lubricant cleaning cycles during pouch film laminate molding

When molding each of the pouch film laminates prepared according to Examples 1 to 6 and Comparative Examples 1 to 5, the lubricant cleaning cycles were measured.

Specifically, during the continuous preparation of the pouch film laminate with the cup part having the maximum molding depth formed, the lubricant cleaning cycle was measured based on the maximum number of strokes in which wrinkles did not occur.

The measured results are shown in Table 1 below.

### Experimental Example 4 Measurement of sealing strength

The sealing strength of each of the pouch film laminates prepared according to Examples 1 to 6 and Comparative Examples 1 to 5 was measured.

As a method for measuring the sealing strength of the pouch film laminate, the pouch film laminate was cut into 266 mm in width and 200 mm in height, folded in half to a size of 133mm ? 200mm so that the silicone-based release coating layer was in contact with the pouch film laminate, and the end portion of the long side (200 mm) was then sealed for 1.6 seconds, 3 seconds, or 5 seconds under the conditions: seal bar area of 200mm ? 8mm, temperature of 200? C, and pressure of 0.1 MPa to prepare a pouch-type battery case having a sealing part formed. The sealing strength of the pouch-type battery case according to each sealing time was measured.

Specifically, the sealing strength was calculated from the maximum value of the tensile strength measured by cutting the sealing part formed in the pouch-type battery case at 15 mm intervals and then pulling it in a 180? direction at a speed of 5 mm/min at room temperature using a UTM.

Based on the calculated sealing strength, the result was evaluated as O when the measured sealing strength was 10 kgf or more, and it was evaluated as X when the measured sealing strength was less than 10 kgf.

The evaluation results are shown in Table 1 below.

**[Table 1]**

| | Coefficient of Friction | Molding depth [mm] | Wrinkle Occurrence | Lubricant Cleaning Cycle [Other] | Sealing Strength |
|---|---|---|---|---|---|
| Example 1 | 0.2 | 8 | X | 8000 | O |
| Example 2 | 0.18 | 8 | X | 8000 | O |
| Example 3 | 0.16 | 8 | X | 8000 | O |
| Example 4 | 0.2 | 8 | X | 8000 | O |
| Example 5 | 0.25 | 7.5 | X | 8000 | O |
| Example 6 | 0.2 | 8 | X | 8000 | O |
| Comparative Example 1 | 0.35 | 6.5 | X | 8000 | O |
| Comparative Example 2 | 0.1 | 8 | X | 8000 | X |
| Comparative Example 3 | 0.4 | 6.0 | X | 8000 | X |
| Comparative Example 4 | 0.4 | 6.0 | X | 5000 | O |
| Comparative Example 5 | less than 0.05 | 8.0 | O | 500 | O |

Referring to Table 1, the pouch film laminates according to Examples 1 to 6, in which the second sealant layer included polypropylene (PP) modified with siloxane having a weight average molecular weight of 100,000 to 500,000 did not generate wrinkles during molding, had long lubricant cleaning cycles and exhibited excellent sealing strength, compared to the pouch film laminates according to Comparative Examples 1 to 5.

### [Description of Reference Signs]

1: Pouch film laminate
10: Base layer
12: Polyethylene terephthalate film
14: Nylon film
20: Gas barrier layer
30: Sealant layer
32: First sealant layer
34: Second sealant layer
200: Pouch-type secondary battery
210: Pouch-type battery case
220: First case
222: Cup part
224: Accommodation part
230: Second case
232: Cup part
240: Bridge part
250: Sealing part
216260 Electrode assembly
270: Electrode tab
272: Positive electrode tab
274: Negative electrode tab
280: Electrode lead
282: Positive electrode lead
284: Negative electrode lead
290: Insulating part

## Claims

1. A pouch film laminate, comprising a base layer, a gas barrier layer, and a sealant layer, which are sequentially laminated,
wherein the sealant layer includes a first sealant layer and a second sealant layer laminated on the first sealant layer,
the second sealant layer includes polypropylene (PP) modified with siloxane, and
the polypropylene (PP) modified with siloxane has a weight average molecular weight of 100,000 to 500,000.

2. The pouch film laminate of claim 1,
wherein the second sealant layer comprises the polypropylene (PP) modified with siloxane in an amount of 10 wt% to 70 wt% based on a total weight of the second sealant layer.

3. The pouch film laminate of claim 1,
wherein the second sealant layer has a thickness of 10µm.

4. The pouch film laminate of claim 1,
wherein an amount of the lubricant present on the surface of the sealant layer is less than 1mg/m².

5. The pouch film laminate of claim 1,
wherein the sealant layer has a coefficient of friction of 0.05 to 0.30.

6. The pouch film laminate of claim 1,
wherein the base layer includes any one or more of polyethylene terephthalate (PET) and nylon.

7. The pouch film laminate of claim 1,
wherein the base layer has a thickness of 5µm to 70µm.

8. The pouch film laminate of claim 1,
wherein the gas barrier layer includes one or more metals selected from aluminum (Al), copper (Cu), stainless steel (SUS), nickel (Ni), titanium (Ti), and INVAR.

9. The pouch film laminate of claim 1,
wherein the gas barrier layer has a thickness of 20µm to 100µm.

10. The pouch film laminate of claim 1,
wherein the first sealant layer includes one or more selected from polypropylene (PP), acid modified polypropylene (PPa), and cast polypropylene (CPP).

11. The pouch film laminate of claim 1,
wherein the sealant layer has a thickness of 30µm to 13µm.

12. The pouch film laminate of claim 1,
wherein the pouch film laminate has a thickness of 120µm to 300µm.

13. A pouch-type battery case prepared by drawing and molding the pouch film laminate of claim 1

14. A pouch-type secondary battery comprising the pouch-type battery case of claim 13
